# EUROPEAN PATENT SPECIFICATION

(11) **EP 0 883 576 B1**
(45) Date of publication and mention of the grant of the patent: **31.07.2002**
(21) Application number: 97906379.9
(22) Date of filing: 26.02.1997
(51) Int. Cl.: C02F 11/12

(54) **PARTICLE DEWATERING DEVICE**
VORRICHTUNG ZUR PARTIKELENTWÄSSERUNG
DISPOSITIF DE DESHYDRATATION DE PARTICULES

(30) Priority: 29.02.1996 SE 9600799
(43) Date of publication of application: 16.12.1998
(73) Proprietor: Stigebrandt, Ake, 440 30 Marstrand (SE)
(72) Inventor: Stigebrandt, Ake, 440 30 Marstrand (SE)
(74) Representative: Lindberg, Klas Valter Bo
(86) International application number: SE9700312
(87) International publication number: WO9731867

(56) References cited:
- WO-A-87/05005
- AT-B- 393 118
- NO-B- 166 291

## Description

### Technical field

The present invention relates to a dewatering device for batchwise separation of liquid from particle-laden sludge, and it is particularly intended for use in small and medium size plants.

### Background

In water purification processes residue is produced in the form of particles that must be collected. The feature common to most substances and processes is that the particles end up in so called sludge having high water contents. The nature of the resulting sludge differs widely, depending on the substances that are separated in the cleaning process and the structure of the cleaning process. For instance, sludge emanating from cleaning processes within the food industry may form a primary material to be further processed into protein for use in such products as for instance animal food. Sludge emanating from surface treatment industries, on the other hand, often consists of environmentally hazardous waste which must be handled accordingly.

Generally, it is desirable in all processes that the volume of the resulting sludge be small, which could only be achieved by concentrating the particle contents in the sludge, i.e. by removing as large quantities of liquid as possible from the sludge.

A great number of different techniques exists to concentrate the particle contents of the separated sludge. Often this is a multi-step process the first step of which is a purely physical method, such as sedimentation of particles with subsequent decanting of the liquid phase. In order to obtain a desired end result this step is followed by, for instance, air drying of particles on a bed of sand. Other and more rapid methods involve mechanical treatments, such as dewatering by means of centrifugal devices of decanter type or compression by means of screen belt presses, chamber filter presses or similar machines. The material may also be dried by heating and evaporation.

AT-B-0 393 118 disclose a mechanical sludge dewatering device according to the preamble of appended claim 1.

The technical result of the techniques enumerated above is satisfactory but each technique requires special equipment and special conditions.

In plants producing comparatively small volumes of sludge the investment and operational costs of machines available on the market are too high, for which reason mechanical dewatering of sludge normally is not used in such plants. Instead, the sludge is transported to other places to be dewatered.

Several disadvantages are connected with this method from handling, economical, sanitary and environmental aspects.

### Object of the invention

The object of the present invention is to meet the needs for efficient dewatering of sludge in small and medium-sized water purifying plants by at least partly eliminating the disadvantages inherent in prior-art technology.

This object is obtained by a dewatering device defined as appears from the appended claims.

### Brief description of the drawings

In the drawings:
Fig. 1 is cross-sectional view of a dewatering device without the expansion body;
Fig. 2 is a cross-sectional view of a dewatering device in accordance with the invention, the expansion body being shown in its unexpanded state and the bottom hatch in its open position;
Fig. 3 is a cross-sectional view of the dewatering device of Fig. 2, the view showing the expansion body in its expanded state and the bottom hatch in its closed position;
Fig. 4 is a cross-sectional view of a dewatering device including an expansion body in accordance with a different embodiment, the latter being shown in its expanded state;
Fig. 5 is a cross-sectional view of a dewatering device of Fig. 4 showing the expansion body in the unexpanded state thereof;
Fig. 6 is a cross-sectional view taken along line VI-VI of Fig. 4;
Fig. 7 is a cross-sectional view taken along line VII-VII in Fig. 5; and
Fig. 8 is an enlarged view of the upper part of the dewatering device of Fig. 4.

### Description of preferred embodiments

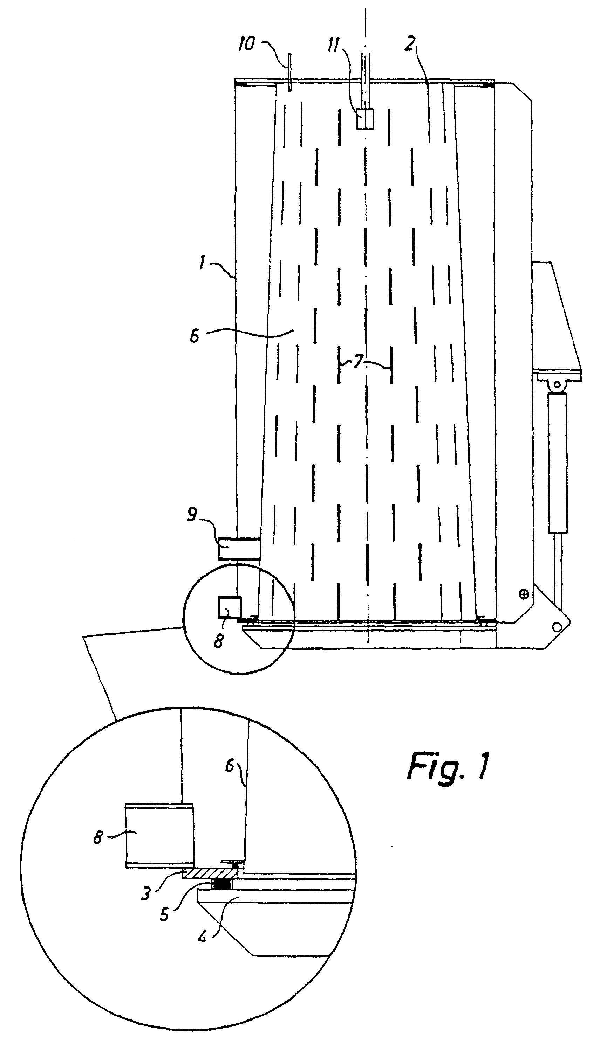

A particle dewatering device suitable for modification according to the invention is shown in Fig. 1. It comprises a closed circular container 1 with a lid 2 thereon. The bottom 3 of the container comprises a flange with a seal 5 against which pressingly abuts an openable hatch 4. The hatch preferably is actuated mechanically by means of for instance a piston-and-cylinder unit.

Inside the container the latter is formed with an interior wall 6 consisting of a conically shaped jacket having a cut top, the largest diameter of which is slightly smaller than the diameter of the container and the base of which having the larger diameter faces downwards, towards the inner bottom of the container. The conically shaped jacket is closely sealed against the upper and lower parts of the container.

The bottom hatch 4 of the container covers the entire base of the interior cone member whereby the conical member is completely open downwards when the hatch assumes its open position.

The conically shaped wall 6 is provided with slits/apertures 7 the extent and configuration of which are adapted to the specific functional requirements on the equipment in dependence of the type of sludge for which the container is intended.

The particle dewatering device is formed with a pipe 9 for infeed of material. The pipe conducts the material to the space situated interiorly of the perforated conical jacket 6.

The lower part of the external jacket is formed with a pipe 8 for removal of liquid separated by the particle dewatering device.

In the space interiorly of the perforated interior wall a sensor 10 is located to emit a signal in response to a filled container.

Inside the perforated conical member flushing nozzles 11 are positioned and directed as to flush clean the exterior of the perforated jacket.

This is a basic structure of the particle dewatering device suitable for modification according to the invention, which may be used for dewatering of material not in need of compression, i.e. material that does not bind water and the compression of which only marginally reduces the volume. In the case of material of this type gravimetric run-off drainage is sufficient. Examples of materials of this type are sand, machine shavings and scales. In the following will be described a variety of the particle dewatering device in accordance with the invention which also compresses the material and consequently is able to separate water from material of a nature making compression necessary. Examples of materials of this type which at least to some extent bind water are fibrous materials, sludge emanating from protein precipitation processes, sludge emanating from sewage purification plants and hydroxide sludge emanating from metal treatment processes.

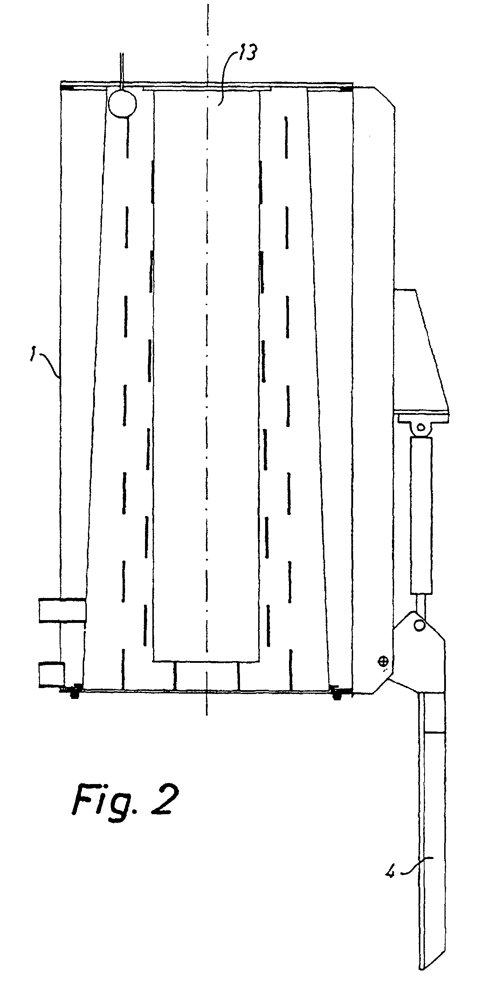

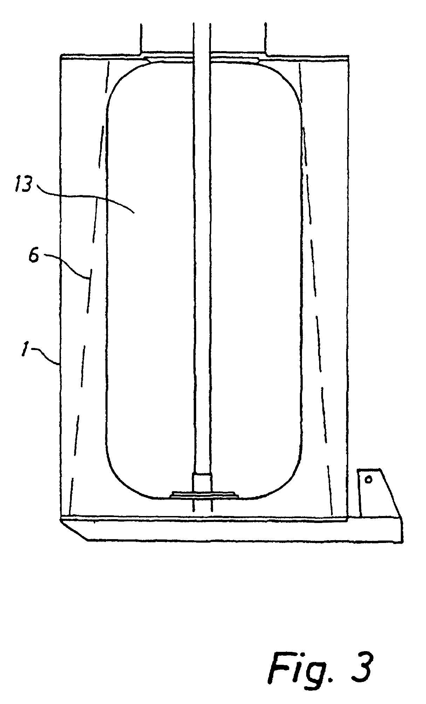

A variety of a particle dewatering device of this kind is shown in Figs 2 and 3. In accordance with the invention the dewatering device comprises, in addition to the components mentioned above, also an expansion body 13 which is placed on the center axis of the cone and in principle has a height equalling that of the container and of the conical wall.

As illustrated in Figs 2 and 3 the expandable body 13 may be configured as a hose which is being filled with air or liquid the pressure of which is rising, thus expanding the hose volume. As it expands, the hose deplaces material introduced into the container, causing the pressure to rise and the liquid to be forced outwards. This embodiment is advantageous in that when air is used as the expansion medium the air may be discharged into the container after the expansion, externally of the conical wall, the rapidly deflated expansion body together with the rising exterior pressure contributing to the sludge material being dislodged from the walls. In this manner the emptying capacity of the dewatering device is increased while at the same time the need for flushing clean the conical wall is reduced. A particularly satisfactory cleaning effect is obtained when the expansion member is compressed very rapidly, which produces a surge effect in the form of a strong pressure wave against the liquid-pervious wall, having a direction opposite to that of the liquid that is being separated during the separation phase.

The hose-shaped expansion member in accordance with this embodiment advantageously is disposed in the separation chamber as a separate removable unit. For instance, the unit may be attached to the container lid. As sludge is being introduced into the container it compresses the hose about a stay positioned inside the hose and fixing the latter in the correct position.

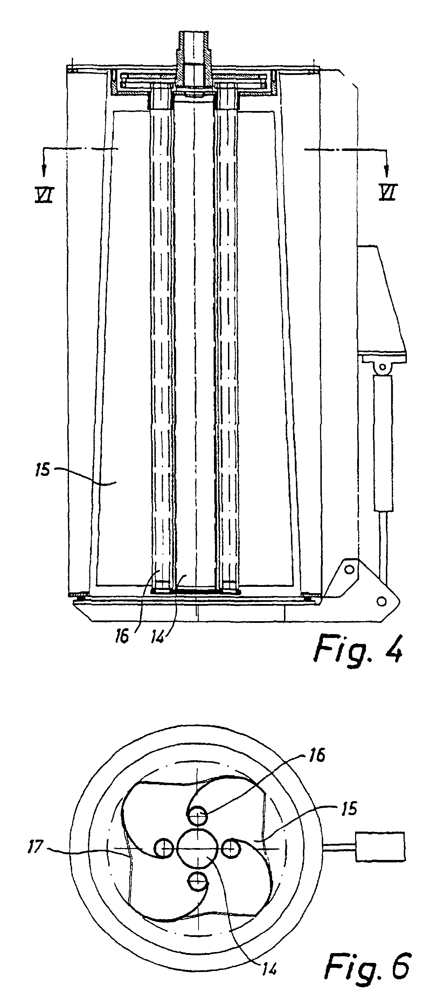

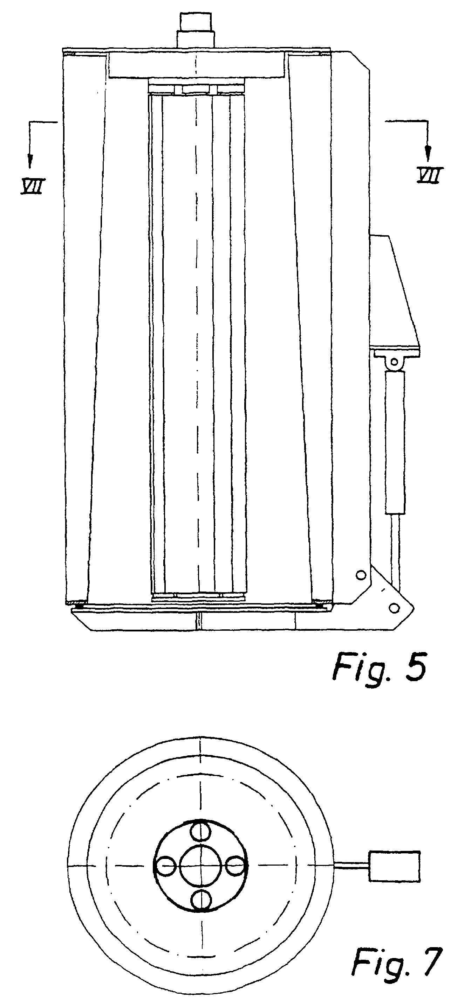

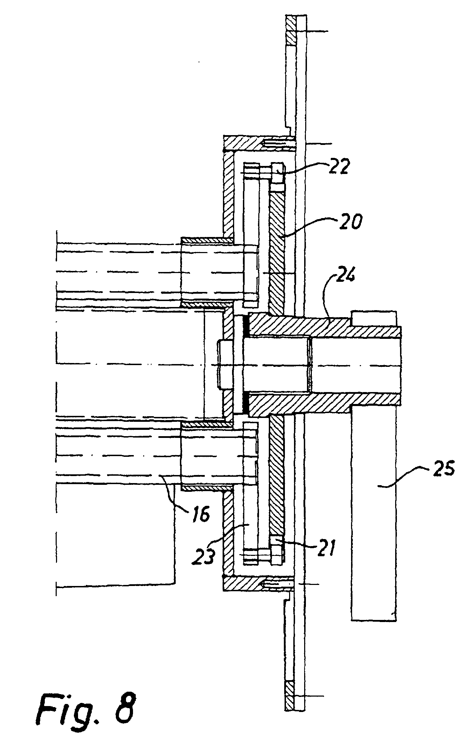

Alternatively, as illustrated in Figs 4-7, wing-like members 15 may be mounted on a central holder, e.g. a centrally positioned tube 14, in such a manner that one side of the wing members is attached to a shaft 16 running in parallel with the tube 14, allowing a wing member 15 to be turned about its shaft 16 such that its opposite side will be swung towards the periphery of the dewatering device. Preferably, the wings 15 have a curvature in parallel with the periphery of the center tube 14 and they are configured in such a manner that when assuming a position in which they are folded inwards, towards the center tube, they partly cover each other with or without overlap. As illustrated in an enlarged view in Fig. 8 the wings could be actuated e.g. by means of a rotatable disc 20 having guide grooves 21 therein of at least a predetermined radial extension. Rotating pins 22 project into the guide grooves and via levers 23 they are connected to the prolongation of the wing member shafts 16. In addition, the disc is provided with a protruding rotary stub axle 24 which may be connected to a motor via a crank shaft 24 or the like. By rotating the disc 20 via the drive shaft the pins 22 are forced to take part in the rotary motion and via the levers 23 they turn the wing member shafts 20 and at the same time the wing members. An advantage of this embodiment is that as the material is being forced outwards shearing stress is simultaneously exerted thereon in the area of the peripheral wall, with the result that the perforated apertures are kept unblocked while at the same time the sludge is treated mechanically in a manner breaking up the sludge structure, thus increasing the drainage or run-off. A membrane 17 is placed intermediate the wing members in accordance with the invention to seal off the inter-wing space as the wing members are being swung outwards. This effect may be achieved by stationarily mounted membranes the length of which is adapted to a maximum spacing between the wing members, or by a flexible membrane in the form of a hose which is slid over the inwards-folded wing members. In this manner liquid is prevented from flowing back through the perforations and above all sludge is prevented from flowing into the space of displacement.

In the dewatering operation the following steps are performed:

Via the inlet tube 9 the dewatering device is filled to the desired level which is sensed by a level sensor 11, whereupon the filling operation is interrupted. By gravimetric run-off/drainage, liquid is removed from the dewatering device. This is effected by liquid being drained through the perforations in the conical separation walls into the adjacent outer space in the dewatering device, from which space it is discharged through the outlet. In this manner the volume of the sludge supplied to the container is reduced and the particle concentration is increased.

When the volume has reduced to a predetermined level sludge is again filled up to the filling level. The run-off of liquid is continued until the lower level is again obtained and refill of sludge takes place again. This procedure is repeated a predetermined number of times, which may be set optionally, until the particle concentration of the sludge has reached a desired value.

During the fill-up phase flocculation agents or other process-assisting chemicals may be added to the flow of material supplied to the dewatering device, to improve the drainage properties of the material.

The re-fill of the dewatering device having been concluded liquid is drained for a predetermined period, which may be set optionally and which is adjusted to the properties of the material supplied.

If the material is of a kind that need to be compressed (as discussed above), the sludge is compressed following the drainage period by expanding a member, such as an expansion body inside the separation device, which forces the material towards the periphery of the dewatering device.

After the desired drainage/run-off period and upon completion of the compression, when such compression is used, the dewatering device is emptied by opening the bottom hatch, allowing the material collected in the dewatering device to fall out by gravity. Owing to the conical configuration of the interior wall the material easily separates from the wall.

After emptying, the hatch is reclosed and the inner face of the dewatering device is flushed with the aid of the flushing nozzles 11 for a desired, suitable period of time, whereupon a new cycle of the dewatering process may be initiated.

Several varieties of the dewatering device are possible and are included in the scope of protection of the appended claims. In addition to the modifications already mentioned it is, for instance, possible to replace the outer wall of the container by channels or the like to collect the separated water at the lower part of the container.

## Claims

1. A dewatering device for batchwise separation of liquid from particle-laden sludge, comprising a closed, downwards openable container having a liquid-pervious wall (6), and an inlet pipe (9) which is connected to the container for infeed of sludge to said container, and an expansion member (13-17) located centrally inside the container and adapted, when expanding, to increase the pressure of the sludge supplied to the container, wherein the expansion member comprises a flexible and expandable bladder (17), preferably of tubular shape, which is adapted to expand upon introduction thereinto of an expansion medium, such as a gas or a liquid, **characterised in that** the expansion member is formed with an outlet opening so arranged that after the expansion the expansion medium is admitted into the container but exteriorly of the liquid-pervious wall.

2. A dewatering device according to claim 1, **characterised in that** the radial extension of the liquid-pervious container wall increases in the downwards direction.

3. A dewatering device as claimed in any one of the preceding claims, **characterised in that** the liquid-pervious wall has a conical configuration with a downwardly increasing diameter size.

4. A dewatering device according to anyone of the preceding claims, **characterised in that** the container is provided with nozzles (10) directed towards the interior face of the container to flush and clean said face after emptying.

## Patentansprüche

1. Entwässerungseinrichtung zum chargenweisen Abtrennen von Flüssigkeit aus einem teilchenhaltigen Schlamm, umfassend: einen geschlossenen, nach unten zu öffnenden Behälter mit einer flüssigkeitsdurchlässigen Wand (6) und ein Einlaßrohr (9), daß zur Einleitung von schlamm in den Behälter mit diesem verbunden ist, und ein Ausdehnungsglied (13-17), das in dem Behälter in der Mitte angeordnet und dafür ausgelegt ist, beim Ausdehnen den Druck des dem Behälter zugeführten Schlamms zu erhöhen, wobei das Ausdehnungsglied eine flexible und ausdehnbare Blase (17) umfaßt, die bevorzugt von schlauchartiger Form und dafür ausgelegt ist, sich auszudehnen, wenn in sie ein Ausdehnungsmedium wie etwa ein Gas oder eine Flüssigkeit eingeleitet wird, **dadurch gekennzeichnet, daß** das Ausdehnungsglied mit einer Auslaßöffnung ausgebildet ist, die so angeordnet ist, daß nach dem Ausdehnen das Ausdehnungsmedium in den Behälter eingeleitet wird, aber außerhalb der flüssigkeitsdurchlässigen Wand.

2. Entwässerungseinrichtung nach Anspruch 1, **dadurch gekennzeichnet, daß** das radiale Ausmaß der flüssigkeitsdurchlässigen Wand nach unten hin zunimmt.

3. Entwässerungseinrichtung nach einem der vorhergehenden Ansprüche, **dadurch gekennzeichnet, daß** die flüssigkeitsdurchlässige Wand eine kegelförmige Konfiguration mit einer nach unten zunehmenden Durchmessergröße aufweist.

4. Entwässerungseinrichtung nach einem der vorhergehenden Ansprüche, **dadurch gekennzeichnet, daß** der Behälter mit auf die Innenfläche des Behälters gerichteten Düsen (10) versehen ist, um die Fläche nach dem Leeren abzuspülen und zu säubern.

## Revendications

1. Dispositif de déshydratation pour séparer du liquide en discontinu de boues de curage chargées de particules, comprenant un récipient fermé apte à s'ouvrir vers le bas qui comporte une paroi perméable aux liquides (6), et un tuyau d'entrée (9) qui est relié au récipient pour l'alimentation des boues de curage dans ledit récipient, ainsi qu'un élément d'expansion (13 - 17) disposé en position centrale à l'intérieur du récipient et conçu, lors de son expansion, pour augmenter la pression des boues de curage alimentées au récipient, l'élément d'expansion comprenant une vessie flexible et apte à s'expanser (17), de préférence de forme tubulaire, qui est conçue pour s'expanser lorsqu'on y introduit un milieu d'expansion tel qu'un gaz ou un liquide, **caractérisé en ce que** l'élément d'expansion présente une ouverture de sortie arrangée de telle sorte qu'après l'expansion, le milieu destiné à cet effet est admis dans le récipient, mais à l'extérieur de la paroi perméable aux liquides.

2. Dispositif de déshydratation selon la revendication 1, **caractérisé en ce que** l'extension radiale de la paroi du récipient perméable aux liquides augmente dans la direction descendante.

3. Dispositif de déshydratation selon l'une quelconque des revendications précédentes, **caractérisé en ce que** la paroi perméable aux liquides possède une configuration conique, dont la dimension du diamètre augmente vers le bas.

4. Dispositif de déshydratation selon l'une quelconque des revendications précédentes, **caractérisé en ce que** le récipient est équipé de buses (10) orientées vers la face interne du récipient pour rincer et nettoyer ladite face après le vidage.
